# EUROPÄISCHE PATENTSCHRIFT

(11) **EP 1 509 360 B1**
(45) Veröffentlichungstag und Bekanntmachung des Hinweises auf die Patenterteilung: **12.07.2006**
(21) Anmeldenummer: 03755933.3
(22) Anmeldetag: 21.05.2003
(51) Int. Cl.: B23Q 1/48, B23Q 1/54, B23Q 1/01

(54) **VORRICHTUNG ZUR BEARBEITUNG VON WERKSTÜCKEN SOWIE MASCHINENANORDNUNG HIERZU**
DEVICE FOR MACHINING WORKPIECES AND MACHINE ARRANGEMENT THEREFOR
DISPOSITIF D'USINAGE DE PIECES ET ENSEMBLE MACHINE A CET EFFET

(30) Priorität: 03.06.2002 DE 10224577
(43) Veröffentlichungstag der Anmeldung: 02.03.2005
(73) Patentinhaber: Alfing Kessler Sondermaschinen GmbH, 73433 Aalen (DE)
(72) Erfinder: HANSCH, Stefan, 73434 Aalen (DE); BIELITZA, Peter, 73431 Aalen (DE)
(74) Vertreter: HOFFMANN EITLE
(86) Internationale Anmeldenummer: PCT/EP2003/005327
(87) Internationale Veröffentlichungsnummer: WO 2003/101663

(56) Entgegenhaltungen:
- DE-A- 19 616 526
- US-A- 5 664 308

## Beschreibung

### Gebiet der Erfindung

Die Erfindung bezieht sich auf eine Vorrichtung zur Bearbeitung von Werkstücken, mit der Werkstücke insbesondere der spanabtragenden Bearbeitung unterworfen werden können. Solche Vorrichtungen dienen dazu, Werkstücke in einem Bearbeitungszentrum zu bearbeiten, d. h. das Werkstück mehreren Bearbeitungsschritten bzw. Bearbeitungsvorgängen zu unterwerfen, ohne dass ein Transfer des Werkstücks von einer Bearbeitungsstation zu einer weiteren Station stattfinden muss. Die Erfindung bezieht sich ferner auf eine Maschinenanordnung, in der eine Vorrichtung der.oben beschriebenen Art zum Einsatz kommt.

### Stand der Technik

Bearbeitungszentren, die ohne das Werkstück umspannen zu müssen, mehrere Bearbeitungsschritte bzw. Bearbeitungsvorgängen an dem Werkstück durchführen können, sind in der Fertigungstechnik bekannt.

Beispielsweise beschreibt die DE-OS 33 30 942 eine Anordnung mit einem drehbaren Winkelfräskopf und einem drehbaren Werkstückaufspanntisch, damit das Werkstück bezüglich der Spindel in verschiedene Bearbeitungspositionen gebracht werden kann. Die Spindel selbst ist fest an einem Arm angebracht und kann zusammen mit dem Arm um eine Achse geschwenkt werden, die senkrecht zur Spindelrotationsachse verläuft, so dass die Spindel bezüglich des Werkstücks eine Kippbewegung durchführen kann. Ferner kann das Werkzeug um eine weitere Achse, ebenfalls senkrecht zur Spindelrotationsachse gedreht werden.

Aus der DE-OS 196 16 526 ist eine Werkzeugmaschine für den Feingerätebau, insbesondere zur Bearbeitung optischen Werkstoffen für die Herstellung von Optikteilen bekannt. Bei dieser Vorrichtung ist eine Spindel an einem Arm angebracht, so dass die Spindelrotationsachse parallel zu dem Arm verläuft. Die Spindel kann entlang des Arms verfahren werden und zusammen mit dem Arm geschwenkt werden, d. h. um eine Achse geschwenkt werden, die senkrecht zur Spindeldrehachse verläuft.

Schließlich beschreibt die FR 2 528 745 eine Vorrichtung zur dreidimensionalen Bearbeitung von Werkstücken. Dazu wird eine Spindel an einem trommelartigen Element gelagert, wobei das trommelartige Element innerhalb eines Blocks seinerseits drehbar ist. Durch Drehen des trommelartigen Elements wird die Spindel mitbewegt, so dass unterschiedliche Bearbeitungspositionen erreicht werden können. Um die weiteren Raumrichtungen abzudecken, ist jeweils eine Linearverstellung in zwei zueinander senkrechten Richtungen vorgesehen. Die Spindel selbst ist verhältnismäßig eingeengt im Inneren des trommelartigen Elements und mit diesem in dem Block angeordnet, der das Trommelelement aufnimmt.

### Darstellung der Erfindung

Es ist eine Aufgabe der vorliegenden Erfindung, eine Vorrichtung zur Bearbeitung von Werkstücken, insbesondere zur spanabtragenden Bearbeitung von Werkstücken zu schaffen, die einfach aufgebaut ist, eine gute Spanabfuhr ermöglicht und einen steifen Grundaufbau aufweist.

Diese Aufgabe wird mit einer Vorrichtung mit den Merkmalen des Anspruchs 1 gelöst.

Der Erfindung liegt der Gedanke zugrunde, den Antrieb vom Spanraum zu trennen, so dass eine gute Spanführung und Spanabfuhr möglich wird, die den Antrieb und die Führungen für die einzelnen Verstellbewegungen nicht beeinträchtigt. Dies wird dadurch erreicht, dass eine der Achsen nicht wie gewöhnlich als lineare Achse ausgeführt wird, sondern eine Drehbewegung eines Hebels vorgesehen wird, an dessen Ende die Spindel linear verschiebbar angebracht ist. Dadurch kann ausgenützt werden, dass das freie Ende des Hebels einen verhältnismäßig größen Bereich überstreicht, d. h. die üblicherweise zur Verfügung gestellte Linearbewegung ersetzen kann, und gleichzeitig die Zugänglichkeit der Spindel zum Werkstück gewahrt bleibt, da die Spindel am freien Ende des Schwenkarms gelagert ist.

Vorteilhafte Ausführungsformen sind durch die übrigen Ansprüche gekennzeichnet.

So ist nach einer bevorzugten Ausführungsform die Konsole, an der der Schwenkarm angelenkt ist, in vertikaler Richtung verschiebbar und der Schwenkarm um eine horizontale Achse schwenkbar, so dass die Spindel ebenfalls horizontal liegt. Dadurch wird vermieden - wie dies bei einer vertikalen Spindellage der Fall wäre - dass in dem auf dem Tisch in der Vorrichtung liegenden Werkstück Späne liegen bleiben könnten. Vielmehr fallen in diesem Fall die Späne frei nach unten in einen Entsorgungskanal, der im Maschinenbett vorgesehen ist. Dies bietet insbesondere Vorteile bei der Trockenbearbeitung.

Bevorzugterweise sind zur linearen Verschiebung in Y-Richtung, die weiterhin vorteilhafter Weise die vertikale Richtung ist, zwei Führungsschienen angeordnet. Dabei sind die Führungsschienen vorzugsweise so gestaltet, dass sie senkrecht von einem Maschinenbett nach oben stehen und die Konsole jeweils im Bereich ihrer Ränder abstützen. Dies kann insbesondere dann in vorteilhafter Weise erreicht werden, wenn die Konsole plattenförmig ist, so dass die Führungen an einer Seite der Platte, also einer großen Plattenfläche, bzw. an gegenüber liegenden Schmalseiten der Platte angebracht werden können. In diesem Fall liegt der Schwenkarm vorzugsweise in einem mittleren Bereich der Plattenfläche und zwar so, dass die Anordnung symmetrisch zu einer Achse ist, die mittig zwischen beiden Führungsschienen verläuft. Durch diese Anordnung kann weiterhin eine gute Spanabfuhr erreicht werden und zusätzlich eine gute Zugänglichkeit zum Werkstück gewahrt bleiben. Darüber hinaus ist es möglich, die Achse, also die linearen Führungen, zur Verstellung in Y-Richtung, gut gegen Späne abzudecken. Das Abdeckungskonzept kann dabei einfach gehalten werden, da die Achsen nicht wie üblich jeweils als lineare Verschiebeachsen aufeinander aufgesetzt sind, wodurch zwangsläufig eine voluminöse Anordnung entstehen würde.

Die Vorrichtung bietet darüber hinaus weiterhin den Vorteil, dass die räumliche Anordnung, insbesondere wenn die linearen Führungen zur Verschiebung in Y-Richtung vertikal angeordnet sind, sich nicht von gegenwärtig eingesetzten, üblichen Varianten hinsichtlich der Lage der Paletten zur Vorrichtung unterscheidet. Vielmehr können weiterhin horizontal liegende Paletten verwendet werden, so dass beim Beladen die bereits vorhandenen Spannvorrichtungen eingesetzt werden können.

Vorteilhafterweise wird für den Antrieb der linearen Verschiebebewegung sowohl der Spindel am Schwenkarm bzw. der Verschiebebewegung der Konsole ein Lineardirektantrieb eingesetzt. Mit Hilfe dieser Antriebe können hohe Beschleunigungen erreicht werden. In ähnlicher Weise wird vorteilhafterweise darüber hinaus auch für die Rotationsbewegung des Schwenkarms ein Direktantrieb, in diesem Fall ein Rundantrieb, eingesetzt. Auch dadurch können hohe Bescheunigungen erreicht werden. Alternativ können ebenfalls andere bekannte Antriebsvarianten sowohl für die linearen Verstellbewegungen als auch für die Schwenkbewegung des Schwenkarms eingesetzt werden.

Grundsätzlich kann die plattenförmige Konsole in jeder geeigneten Weise gestaltet sein. Vorteilhaft ist es jedoch, wenn die plattenförmige Konsole mit einem Durchbruch oder einer Aussparung ausgestattet ist, durch die die Spindel hindurchragt. Der Durchbruch bzw, die Aussparung sind selbstverständlich derart gestaltet, dass die Bewegungsfreiheit der Spindel bei der Schwenkbewegung nicht beeinträchtigt ist.

Vorteilhafterweise wird die erfindungsgemäße Vorrichtung zu einer Maschinenanordnung mit einem Drehtisch zum Aufspannen eines Werkstücks kombiniert. Statt einem solchen Drehtisch, der beispielsweise als NC-Rundtisch ausgeführt werden kann, sind als Alternativen auch Wendespanner mit jeweils einer A- und einer B-Achse bzw. Wendespanner mit einer W-Achse und zwei A-Achsen und zugeordneten B-Achsen möglich. Je nach Wahl der Werkstückaufspannvorrichtung, also beispielsweise des Drehtischs bzw. des Wendespanners, kann die Flexibilität der Vorrichtung hinsichtlich der Bearbeitung von Werkstücken weiter verbessert werden.

Die erfindungsgemäße Vorrichtung kann insbesondere vorteilhaft für verschiedene Varianten der Maschinenanordnung eingesetzt werden, so dass ein modulares Konzept entsteht. Beispielsweise können mit der Vorrichtung ein Einspindelkonzept, ein Zweispindelkonzept oder ein sogenanntes Synchronkonzept realisiert werden, d. h. es ist erfindungsgemäß möglich, alternativ eine freistehende Vorrichtung in Kombination mit einer Werkstückaufspannvorrichtung einzusetzen, zwei Vorrichtungen mit einer Werkstückaufspannvorrichtung zu kombinieren bzw. zwei Vorrichtungen mit zwei Werkstückaufspannvorrichtungen auszustatten, so dass eine gleichzeitige Bearbeitung von mehreren Werkstücken bzw. eines Werkstücks von mehreren Seiten möglich ist. Beim Zweispindelkonzept kann alternativ auch jeweils nur eine Spindel zu einer bestimmten Zeit eine Bearbeitung vornehmen, während die zweite Spindel gerade einen Werkzeugwechsel vornimmt, so dass die Rüstseiten beim Werkzeugwechsel reduziert werden.

Wird ein Werkstück mit zwei Spindeln gleichzeitig bearbeitet, kann wahlweise eine Werkstückaufspannvorrichtung eingesetzt werden, die eine Drehung des Werkstücks um eine B-Achse, d. h. eine Achse senkrecht zu den Spindeldrehachsen ermöglicht oder nicht. Je nach Einsatzzweck kann dies Vorteile hinsichtlich kurzer Span-zu-Span-Zeiten haben. Insbesondere wird damit für die Reversierbewegung zwischen zwei Spindeln nicht mehr eine Linearachse verwendet, sondern die Rundachse B des Drehtischs. Dadurch kann eine kompakte Maschinenanordnung erreicht werden, die die Grundidee der Vorrichtung unterstützt, nämlich einen sehr kompakten und steifen Grundaufbau zu erreichen, wobei lediglich geringe Massen bewegt werden, was zu hohen Dynamikwerten führt und damit den Einsatz von Direktantrieben ermöglicht.

Hinsichtlich der Werkstückhandhabung sind ebenfalls verschiedene Varianten vorteilhaft. Beispielsweise kann ein Plattenwechsler mit hauptzeitparalleler, manueller Beladung vorgesehen werden, oder ein Plattenwechsler mit hauptzeitparalleler Roboterbeladung in Form einer Portal- oder Gelenkarmausführung, die eine Direktbeladung mit einem Roboter am NC-Rundtisch oder andere gängige Varianten ermöglicht.

Auch die Werkzeugbeladung kann bei der vorliegenden Vorrichtung sehr kompakt realisiert werden, nämlich indem die Werkzeugbeladung direkt über die Hauptspindel in das Werkzeugmagazin erfolgt.

Zusammenfassend kann durch die erfindungsgemäße Vorrichtung eine Vorrichtung zum Bearbeiten von Werkstücken erreicht werden, die als modulare Anordnung einsetzbar ist und einen sehr kompakten und steifen Grundaufbau ermöglicht, so das hohe Dynamikwerte erreicht werden. Dadurch kann die erfindungsgemäße Vorrichtung insbesondere gut für die Leichtmetallbearbeitung eingesetzt werden, wobei jedoch auch Einsatzmöglichkeiten in der Guss- oder Stahlbearbeitung denkbar sind.

### Kurze Beschreibung der Zeichnungen

Nachfolgend wird die Erfindung rein beispielhaft anhand der beigefügten Figuren beschreiben, in denen:
Figur 1 eine Vorderansicht der erfindungsgemäßen Vorrichtung zeigt;
Figur 2 eine Seitenansicht der erfindungsgemäßen Vorrichtung mit Drehtisch zeigt;
Figur 3 eine Querschnittsansicht durch die Konsole mit angelenktem Schwenkarm der erfindungsgemäßen Vorrichtung aus Figur 1 zeigt;
Figur 4 eine Maschinenanordnung mit der erfindungsgemäßen Vorrichtung in Zweispindelausführung zeigt; und
Figur 5 eine Maschinenanordnung mit der erfindungsgemäßen Vorrichtung in Synchronanordnung zeigt.

### Wege zur Ausführung der Erfindung

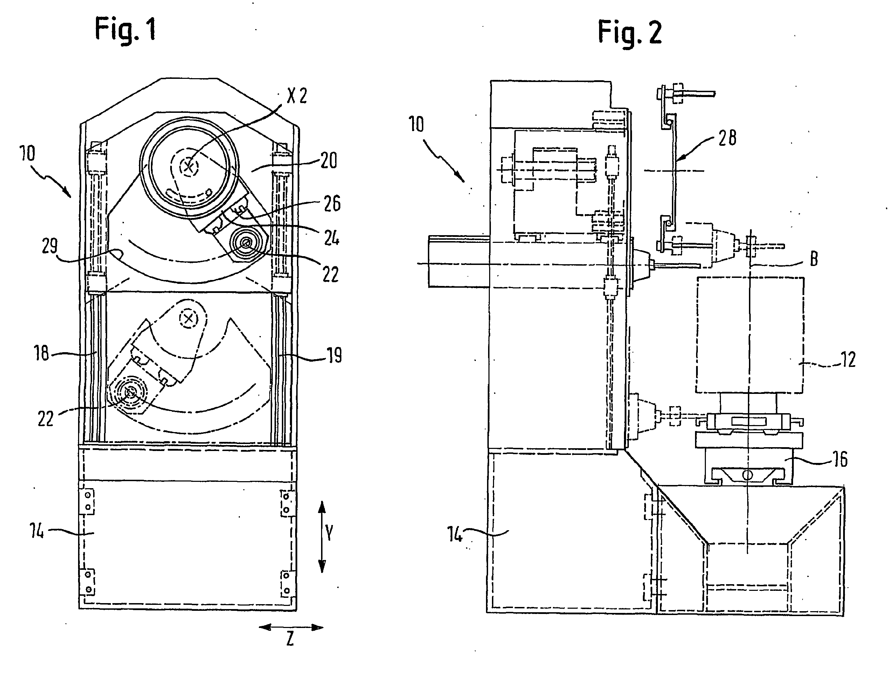

Figuren 1 und 2 zeigen eine erfindungsgemäße Vorrichtung 10 zum Bearbeiten eines Werkstücks 12 jeweils in Vorderansicht bzw. eine Seitenansicht. Die Vorrichtung umfasst ein Maschinenbett 14, an dem zum Befestigen und drehbaren Halten eines Werkstücks 12 ein Drehtisch 16 angebracht ist. In der in Figur 2 dargestellten Ausführungsform kann der Drehtisch eine Drehbewegung um eine Achse B ausführen, d. h. um eine Achse, die senkrecht zur Spindelrotationsachse verläuft und in der in Figur 2 dargestellten Ausführungsform vertikal verläuft. Anstatt des Drehtischs 16 kann alternativ auch eine andere Werkstückaufspannvorrichtung eingesetzt werden, beispielsweise ein Wendespanner.

Wie es am besten in Figur 1 zu erkennen ist, erheben sich von dem Maschinenbett 14 zwei Führungen 18, 19, die als Verschiebeeinrichtung für eine Konsole 20 in Y-Richtung, d. h. in Hoch-Tief-Richtung in der in Figuren 1 und 2 dargestellten Ausführungsform, dienen. Zur Verschiebung der Konsole 20 entlang der Führungen 18, 19 sind Linearantriebe vorgesehen, um hohe Beschleunigungen und damit hohe Dynamiken der Vorrichtung 10 zu erzielen, so dass die Konsole 20 entlang der Führungen 18, 19 aus der in Figur 1 mit durchgezogenen Linien dargestellten oberen Position stufenlos in andere, vertikal darunter liegende Positionen bewegt werden kann, um die Spindel 22 gegenüber dem Werkstück 12 in verschiedene Bearbeitungsstellungen zu bringen. Eine unterste, mögliche Bearbeitungsposition ist mit Strickpunktlinien in Figur 1 dargestellt.

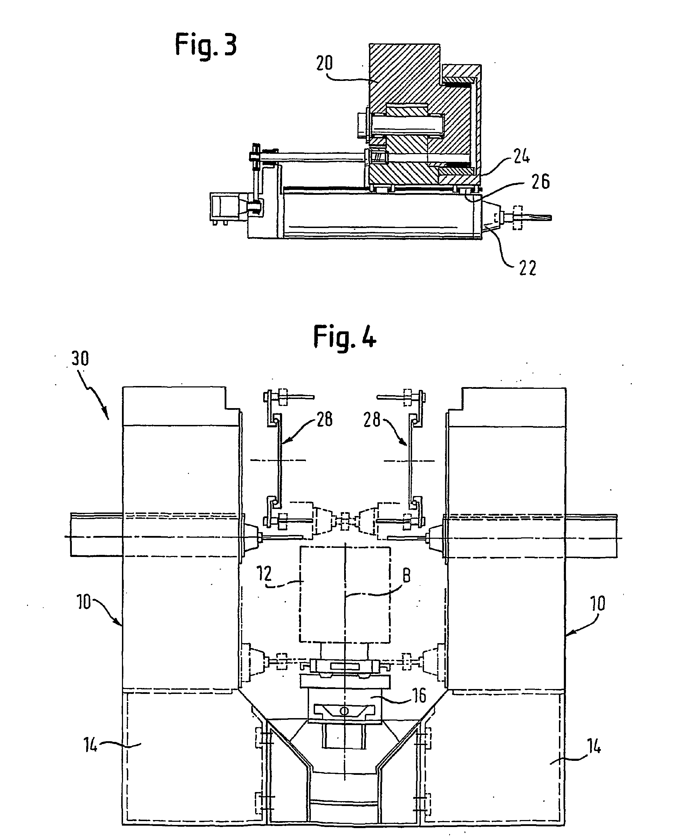

An der Konsole 20, die wie es Figur 3 zu entnehmen ist, als plattenartiges Gebilde gestaltet, ist ein Schwenkarm 24 drehbar angebracht. Der Schwenkarm 24 wird dabei vorzugsweise mittels eines Rundantriebs an der Konsole 20 befestigt, wie es am besten der Figur 3 zu entnehmen ist. Dadurch können auch hohe Dynamiken für die Drehbewegung des Schwenkarms 24 mit der daran angebrachten Spindel 22 erzielt werden, so dass auch eine Bewegung in Z-Achsenrichtung (Recht-Links-Richtung in Figur 1) mit hoher Dynamik möglich ist.

Am freien Ende des Schwenkarms, der beispielsweise - wie in Figur 1 bis 3 dargestellt - eine Schwenkbewegung von einer ersten Ausgangsposition um etwa 120° in eine Endposition durchführen und selbstverständlich in jeder Zwischenposition ebenfalls festgestellt werden kann, ist die Spindel 22 angebracht, so dass sie auf den Führungen 26 mittels Linearantrieb parallel zur Spindelrotationsachse, d. h. in X-Achsenrichtung, verschiebbar ist.

Wie den Figuren 1 bis 3 zu entnehmen ist, wird somit eine der gewöhnlich ebenfalls als Linearbewegung ausgeführten räumlichen Bewegungen der Vorrichtung 10 durch eine Drehbewegung realisiert. Dadurch ist es möglich, die Anordnung kompakt zu gestalten und insbesondere alle Führungen und Antriebe getrennt vom Spanraum, der in Figur 1 im Bereich des Maschinenbetts 14 vorgesehen ist, anzuordnen, nämlich im Bereich der Konsole 20. Somit ist es möglich die Führungen und Antriebe gegenüber Spänen zu schützen, beispielsweise geeignete Abdeckungen vorzusehen, so dass die Vorrichtung auch zur Leichtmetallbearbeitung problemlos eingesetzt werden kann.

Darüber hinaus kann mittels des Werkstückaufspanntischs 16, der z. B. als gewöhnlicher Drehtisch ausgeführt sein kann, das Werkstück ebenfalls gedreht werden, so dass eine höhere Flexibilität bei der Bearbeitung und damit weniger Umrüstzeiten des Werkstücks erforderlich werden.

In Figur 2 ist ferner ein Werkzeugwechselmagazin 28 dargestellt, das so angeordnet ist, dass die Werkzeuge direkt aus dem Magazin in die Spindel eingewechselt werden können. Dazu muss die Spindel lediglich in eine Werkzeugwechselposition gefahren werden.

Neben der in Figuren 1 und 2 dargestellten Einspindelausführung, die als Grundausführung anzusehen ist, ist es auch möglich, zwei der erfindungsgemäßen Vorrichtungen 10 zu einer Zweispindelausführung 30 zu kombinieren. Eine solche Ausführungsform ist in Figur 4 dargestellt. Dabei sind zwei Vorrichtungen 10 jeweils symmetrisch gegenüberliegend an einem Werkstückaufspanntisch 16 angeordnet, der entsprechend zu der in Figur 2 dargestellten Ausführungsform als Drehtisch gestaltet ist. Insbesondere liegt also der Werkstückaufspanntisch 16 zwischen den beiden Vorrichtungen 10, die spiegelsymmetrisch um die Drehachse B des Werkstückaufspanntischs angeordnet sind, so dass die Spindel aufeinanderzu gerichtet sind, um eine gleichzeitige oder abwechselnde Bearbeitung am Werkstück 12, das auf dem Werkstückaufspanntisch 16 aufgespannt ist, vornehmen zu können.

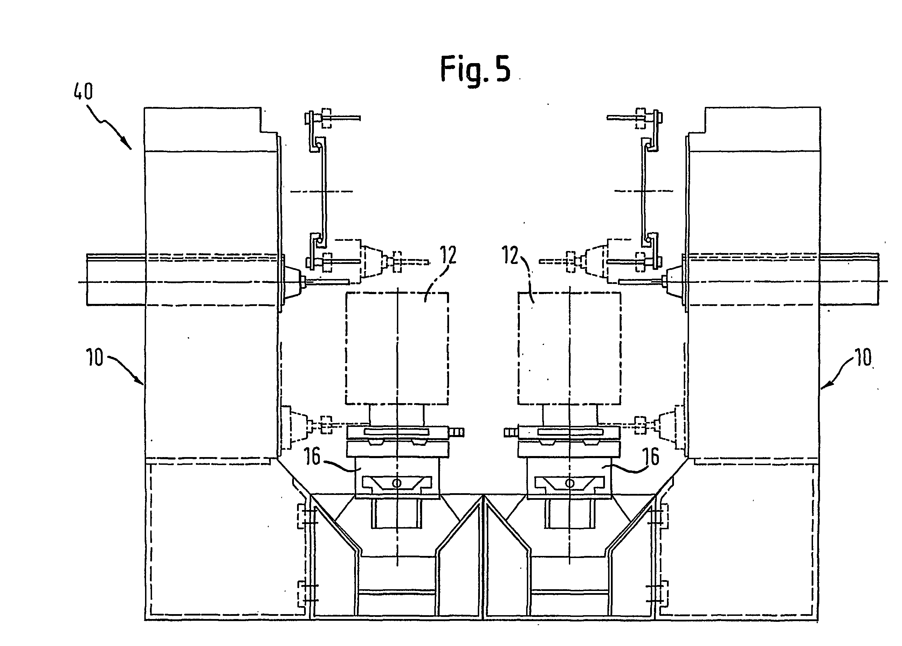

Wie es aus Figur 5 entnehmbar ist, kann eine weitere Alternative, eine sogenannte Synchroneinheit aus zwei Vorrichtungen 10 und zwei Werkstückaufspanneinheiten, beispielsweise zwei Drehtischen 16, gestaltet werden. Die Synchronvorrichtung 40 entsteht dabei aus der in Figur 4 dargestellten Zweispindelausführung dadurch, dass zwischen die beiden Bearbeitungsvorrichtungen 10 ein weiterer Werkstückaufspanntisch 16 eingebracht wird. Somit können unabhängig von einander auf sehr kompakten Raum zwei Werkstücke gleichzeitig bearbeitet werden.

Der wesentliche Aspekt der Erfindung liegt darin, dass durch die kompakte Anordnung der Spindelverstelleinrichtungen, d. h. zweier Linearantriebe zum Ausführen der Y- bzw. X-Bewegung, und einem Drehantrieb zum Ausführen der Z-Bewegung eine kompakte Anordnung geschaffen werden kann, die insbesondere bei einer Aufstellung, wie sie in Figuren 1 bis 5 dargestellt ist, d. h. einer Aufstellung, in der die Spindeldrehachse horizontal verläuft, eine räumliche Trennung zwischen den Antriebskomponenten und dem Spanraum ermöglicht, so dass die Spanabfuhr nicht die Antriebskomponenten, insbesondere die Führungen und die Antriebe, beeinträchtigt. Gleichzeitig wird durch die erfindungsgemäße Anordnung die Vorrichtung kompakt, so dass verhältnismäßig geringe Maßen bewegt werden müssen und dadurch hohe Dynamikwerte erreicht werden können.

## Patentansprüche

1. Vorrichtung (10) zur Bearbeitung von Werkstücken (12), insbesondere zur spanabtragenden Bearbeitung, umfassend:
- eine Spindel (22), die an einem ersten Ende eines Schwenkarms (24) linear verschiebbar in einer Richtung (X) parallel zur Spindelrotationsachse gelagert ist;
- eine Konsole (20), auf der der Schwenkarm (24) an seinem zweiten Ende um eine Achse (X2) parallel zur Rotationsachse der Spindel drehbar gelagert ist, wobei die Konsole (20) in einer Richtung (Y) verschiebbar ist, die senkrecht zur Verschieberichtung (X) der Spindel (22) in allen Schwenkpositionen des Schwenkarms (24) ist.

2. Vorrichtung (10) nach Anspruch 1, **dadurch gekennzeichnet, dass** die Konsole (20) in vertikaler Richtung verschiebbar ist und der Schwenkarm (24) um eine horizontale Achse schwenkbar ist.

3. Vorrichtung (10) nach Anspruch 1 oder 2, **dadurch gekennzeichnet, dass** zur linearen Verschiebung der Konsole (20) in Y-Richtung zwei Führungsschienen (18, 19) vorgesehen sind.

4. Vorrichtung (10) nach einem der vorhergehenden Ansprüche, **dadurch gekennzeichnet, dass** die Konsole (20) plattenförmig ausgebildet und der Schwenkarm (24) in einem mittleren Bereich der Plattenfläche angelenkt ist.

5. Vorrichtung (10) nach Ansprüchen 3 und 4, **dadurch gekennzeichnet, dass** die Führungsschienen (18, 19) in Randsbereichen der plattenförmigen Konsole (20) angeordnet sind.

6. Vorrichtung (10) nach einen der vorhergehenden Ansprüche, **dadurch gekennzeichnet, dass** als Antrieb des Schwenkarms (24) zur Schwenkbewegung ein Rundantrieb, insbesondere ein Direktantrieb vorgesehen ist.

7. Vorrichtung (10) nach einem der vorhergehenden Ansprüche, **dadurch gekennzeichnet, dass** als Antrieb für die Verschiebebewegung der Spindel (22) am ersten Ende des Schwenkarms (24) und/oder für die Verschiebebewegung der Konsole (20) ein Linear-Direktantrieb vorgesehen ist.

8. Vorrichtung (10) nach Anspruch 4 oder 5, **dadurch gekennzeichnet, dass** die plattenförmige Konsole (20) einen Durchbruch (29) oder eine Aussparung aufweist, durch die die Spindel (22) hindurchragt.

9. Maschinenanordnung umfassend eine Vorrichtung (10) nach einem der vorhergehenden Ansprüche und einen Drehtisch (16) zum Aufspannen des Werkstücks.

10. Maschinenanordnung nach Anspruch 9, **dadurch gekennzeichnet, dass** der Drehtisch (16) eine Drehachse (B) parallel zur Verschieberichtung (Y) der Konsole (20) aufweist.

11. Maschinenanordnung (30) nach Anspruch 9 oder 10, umfassend eine weitere Vorrichtung (10) nach einem der Ansprüche 1 bis 7, wobei der Drehtisch (16) zwischen der ersten und der zweiten Vorrichtung angeordnet ist und die Spindeln (22) der beiden Vorrichtungen aufeinanderzu gerichtet sind.

12. Maschinenanordnung (40) nach Anspruch 11, umfassend einen zweiten Drehtisch (16), wobei beide Drehtische zwischen den Vorrichtungen (10) liegen.

## Claims

1. Device (10) for machining workpieces (12), in particular for chip-removing machining, comprising:
- a spindle (22) held at a first end of a swivel arm (24) as linearly displaceable in a direction (X) parallel to the rotational axis of the spindle;
- a bracket (20) on which the swivel arm (24) is held at its second end as rotatable about a shaft (X2) parallel to the rotational axis of the spindle, the bracket (20) being displaceable in a direction (Y) which is perpendicular to the displacement direction (X) of the spindle (22) in all swivel positions of the swivel arm (24).

2. Device (10) according to claim 1, **characterised in that** the bracket (20) is displaceable in the vertical direction and the swivel arm (24) is swivellable about a horizontal axis.

3. Device (10) according to claim 1 or 2, **characterised in that** two guide rails (18, 19) are provided for linear displacement of the bracket (20) in the Y direction.

4. Device (10) according to one of the preceding claims, **characterised in that** the bracket (20) is constructed as plate-shaped and the swivel arm (24) is linked in a central area of the plate surface.

5. Device (10) according to claims 3 and 4, **characterised in that** the guide rails (18, 19) are arranged in peripheral areas of the plate-shaped bracket (20).

6. Device (10) according to one of the preceding claims, **characterised in that** a round drive, in particular a direct drive, is provided as drive of the swivel arm (24) for the swivelling movement.

7. Device (10) according to one of the preceding claims, **characterised in that** a linear direct drive is provided as drive for the displacement movement of the spindle (22) at the first end of the swivel arm (24) and/or for the displacement movement of the bracket (20).

8. Device (10) according to claim 4 or 5, **characterised in that** the plate-shaped bracket (20) has an opening (29) or a recess through which the spindle (22) projects.

9. Machine arrangement comprising a device (10) according to one of the preceding claims and a rotary table (16) for mounting the workpiece.

10. Machine arrangement according to claim 9, **characterised in that** the rotary table (16) has a rotational axis (B) parallel to the displacement direction (Y) of the bracket (20).

11. Machine arrangement (30) according to claim 9 or 10, comprising a further device (10) according to one of claims 1 to 7, the rotary table (16) being arranged between the first and the second device and the spindles (22) of the two devices being directed towards one another.

12. Machine arrangement (40) according to claim 11, comprising a second rotary table (16), both rotary tables being located between the devices (10).

## Revendications

1. Dispositif (10) pour usiner des pièces d'oeuvre (12), en particulier pour un usinage opérant avec enlèvement de copeaux, comprenant :
- une broche (22), montée déplaçable de façon linéaire à une première extrémité d'un bras pivotant (24), dans une direction (X) parallèle à l'axe de rotation de broche ;
- une console (20), sur laquelle le bras pivotant (24) est monté à rotation sur sa deuxième extrémité, autour d'un axe (X2) parallèle à l'axe de rotation de la broche, la console (20) étant déplaçable dans une direction (Y) perpendiculaire à la direction de déplacement (X) de la broche (22) dans toutes les positions de pivotement du bras pivotant (24).

2. Dispositif (10) selon la revendication 1, **caractérisé en ce que** la console (20) est déplaçable en direction verticale et le bras pivotant (24) est pivotant autour d'un axe horizontal.

3. Dispositif (10) selon la revendication 1 ou 2, **caractérisé en ce que** deux glissières de guidage (18, 19) sont prévues pour le déplacement linéaire de la console (20) dans la direction Y.

4. Dispositif (10) selon l'une des revendications précédentes, **caractérisé en ce que** la console (20) est réalisée en forme de plaque, et le bras pivotant (24) est articulé dans une zone médiane de la face de plaque.

5. Dispositif (10) selon les revendications 3 et 4, **caractérisé en ce que** les glissières de guidage (18, 19) sont disposées dans des zones de bordure de la console (20) en forme de plaque.

6. Dispositif (10) selon l'une des revendications précédentes, **caractérisé en ce qu'**est prévu comme entraînement du bras pivotant (24), pour le mouvement de pivotement, un entraînement à mouvement circulaire, en particulier, un entraînement direct.

7. Dispositif (10) selon l'une des revendications précédentes, **caractérisé en ce qu'**un entraînement direct linéaire est prévu comme entraînement pour le déplacement en translation de la broche (22) sur la première extrémité du bras pivotant (24) et/ou pour le déplacement en translation de la console (20).

8. Dispositif (10) selon la revendication 4 ou 5, **caractérisé en ce que** la console (20) en forme de plaque présente un passage (29) ou un évidemment, à travers lequel passe la broche (22).

9. Ensemble machine, comprenant un dispositif (10) selon l'une des revendications précédentes et une table tournante (16) pour le bridage de la pièce d'oeuvre.

10. Ensemble machine selon la revendication 9, **caractérisé en ce que** la table tournante (16) présente un axe de rotation (B) parallèle à la direction de déplacement (Y) de la console (20).

11. Ensemble machine (30) selon la revendication 9 ou 10, comprenant un autre dispositif (10) selon l'une des revendications 1 à 7, la table tournante (16) étant disposée entre le premier et le deuxième dispositif, et les broches (22) des deux dispositifs étant orientées en direction l'une sur l'autre.

12. Ensemble machine (40) selon la revendication 11, comprenant une deuxième table tournante (16), les deux tables tournantes étant situées entre les dispositifs (10).
